# EUROPÄISCHE PATENTSCHRIFT

(11) **EP 4 342 754 B1**
(45) Veröffentlichungstag und Bekanntmachung des Hinweises auf die Patenterteilung: **07.05.2025**
(21) Anmeldenummer: 23194558.5
(22) Anmeldetag: 31.08.2023
(51) Int. Cl.: B60T 13/74, B60T 17/22, F16D 121/26

(54) **VORRICHTUNG, BREMSSYSTEM UND VERFAHREN ZUR STEUERUNG EINER PASSIVEN BREMSEINRICHTUNG**
APPARATUS, BRAKE SYSTEM AND METHOD FOR CONTROLLING PASSIVE BRAKE DEVICE
DISPOSITIF, SYSTÈME DE FREINAGE ET PROCÉDÉ DE COMMANDE D'UN DISPOSITIF DE FREINAGE PASSIF

(30) Priorität: 22.09.2022 DE 102022124342
(43) Veröffentlichungstag der Anmeldung: 27.03.2024
(73) Patentinhaber: KNORR-BREMSE Systeme für Schienenfahrzeuge GmbH, 80809 München (DE)
(72) Erfinder: FUCHS, Andreas, 86368 Gertshofen (DE); VOLLMER, Achim, 82024 Taufkirchen (DE); SCHROEDER CARDOZO, William, 80335 München (DE)

(56) Entgegenhaltungen:
- CA-A1- 2 893 607
- CN-A- 109 878 487
- DE-A1- 10 106 374
- DE-A1- 10 106 377
- DE-B4- 102009 007 485

## Beschreibung

Die vorliegende Erfindung betrifft eine Vorrichtung zur Steuerung einer passiven Bremseinrichtung, insbesondere einer passiven elektromechanischen Bremseinrichtung.

Ferner betrifft die vorliegende Erfindung ein Bremssystem, welches die besagte Vorrichtung umfasst, und ein Verfahren zur Steuerung einer passiven Bremseinrichtung, insbesondere einer passiven elektromechanischen Bremseinrichtung.

In der Praxis werden häufig hydraulische passive Bremssysteme in Straßenbahnen als ausfallsicheres Bremsprinzip eingesetzt. Ein vorgespanntes Federpaket mit Federn sorgt für die Bremskraft, und ein Hydraulikkolben arbeitet gegen die Federn, um die Bremskraft zu verringern. Eine gewünschte Bremskraft kann durch Modulation eines Zylinderdrucks des Hydraulikkolbens mit einem Druckregler erreicht werden. Bei Ausfall des insbesondere elektronischen Druckreglers begrenzt ein Druckbegrenzungsventil den Druck auf rein mechanischem Wege auf einen bestimmten Wert. Ein solcher Kraftbedarf ist jedoch konstant und nicht von einer Fahrzeugbelastung abhängig. Bei einer Vollabschaltung des Systems entlässt ein weiteres Ventil den Zylinderdruck vollständig, so dass eine volle Bremskraft erreicht wird. Auf diese Weise werden zwei Bremskraftstufen (Feststell- bzw. Park- und Sicherheitsbremse) mit höherer Funktionalität realisiert als eine durch die elektronische Druckregelung gesteuerte Bremskraft (Betriebs- und Notbremse).

Die Verfügbarkeit eines hydraulischen Bremssystems wird durch die regelmäßige Wartung der Öl- und Schlauchleitungen aufrechterhalten. Daher hat selbst das fortschrittlichste Bremssystem ein Wartungsintervall, das durch die Flüssigkeit und ihre Peripheriegeräte begrenzt ist. Um diese Einschränkung zu überwinden, werden seit einigen Jahren elektromechanische Bremsen als Alternative entwickelt. Die elektromechanischen Bremsen haben jedoch bisher nicht die gleiche Funktionsfähigkeit wie die hydraulischen Bremssysteme erreicht.

Insbesondere sind bei elektromechanischen Lösungen die Funktionen Betriebs-/Notbremse, Sicherheitsbremse und/oder Parkbremse miteinander insbesondere funktional verbunden und ein Fehler in einer dieser Funktionen kann das gesamte Bremssystem negativ beeinflussen und/oder einschränken, so dass auch die übrigen Bremsfunktionen zumindest teilweise oder vollständig nicht mehr funktionieren.

Eine Vorrichtung zur Steuerung einer passiven Bremseinrichtung ist von DE 101 06 377 A1 bekannt.

Es ist daher Aufgabe der vorliegenden Erfindung die vorgenannten Probleme zu lösen, insbesondere die eingangs genannten Bremsfunktionen mit einer verbesserten Zuverlässigkeit und/oder eine verbesserte Betriebssicherheit zu ermöglichen.

Diese Aufgabe wird erfindungsgemäß gelöst durch eine Vorrichtung zur Steuerung einer passiven Bremseinrichtung, insbesondere einer passiven elektromechanischen Bremseinrichtung, mit den Merkmalen des Anspruchs 1. Danach ist vorgesehen, dass die Folgendes umfasst:
- einen Elektromotor zum Lösen der passiven Bremseinrichtung gegen eine Federkraft;
- eine Motorsteuerungseinheit zur Steuerung des Elektromotors für eine Betriebsbremsung und/oder eine Notbremsung, wobei die Motorsteuerungseinheit mit dem Elektromotor trennbar elektrisch verbunden ist,
- eine erste Bremssteuerungseinheit für eine Sicherheitsbremsung, wobei die erste Bremssteuerungseinheit mit dem Elektromotor trennbar elektrisch verbunden ist, und
- eine zweite Bremssteuerungseinheit für eine Parkbremsung, wobei die zweite Bremssteuerungseinheit mit dem Elektromotor trennbar elektrisch verbunden ist,
wobei die Betriebsbremsung und/oder die Notbremsung mittels der Motorsteuerungseinheit, die Sicherheitsbremsung mittels der ersten Bremssteuerungseinheit und die Parkbremsung mittels der zweiten Bremssteuerungseinheit funktional unabhängig zueinander aktivierbar sind.

Die Erfindung basiert insbesondere auf dem Grundgedanken, dass mittels einer bzw. der Vorrichtung zur Steuerung einer passiven Bremseinrichtung, insbesondere einer passiven elektromechanischen Bremseinrichtung, verschiedene Bremsfunktionen, insbesondere die Betriebsbremsung und/oder die Notbremsung, die Sicherheitsbremsung, und die Parkbremsung, funktional voneinander getrennt sind, in anderen Worten, dass diese Bremsfunktionen funktional unabhängig zueinander aktivierbar sind. Hierdurch kann insbesondere gewährleistbar sein, dass, wenn eine Bremsfunktion nicht ordnungsgemäß im Betrieb ist und/oder ausfällt und/oder ausgefallen ist, die übrigen Bremsfunktionen nicht beeinträchtigt sind. In anderen Worten kann eine Zuverlässigkeit und/oder Betriebssicherheit verbessert sein. Insbesondere dadurch dass die Funktionen der Betriebs-/Notbremsung, Sicherheitsbremsung und/oder Parkbremsung unabhängig zueinander funktional verbunden sind und somit ein Fehler in einer dieser Funktionen ein bzw. das Gesamtsystem nicht nachteilig beeinflussen und/oder einschränken kann, können die übrigen Bremsfunktionen weiter funktionieren, wodurch ein bzw. die besagte verbesserte Zuverlässigkeit und/oder verbesserte Betriebssicherheit erzielbar sein kann.

Es kann vorgesehen sein, dass die erste Bremssteuerungseinheit zwischen der Motorsteuerungseinheit und dem Elektromotor angeordnet ist und/oder die zweite Bremssteuerungseinheit zwischen der Motorsteuerungseinheit und dem Elektromotor angeordnet ist. Hierdurch kann ein vereinfachter Aufbau der Vorrichtung und/oder eine vereinfachte Anbindung der jeweiligen Einheiten in Bezug auf den Elektromotor erzielbar sein. Insbesondere kann hierdurch eine effiziente Trennung der einzelnen Einheiten in Bezug auf den Elektromotor realisierbar sein.

Es kann vorgesehen sein, dass die erste Bremssteuerungseinheit zwischen der Motorsteuerungseinheit und der zweiten Bremssteuerungseinheit angeordnet ist und die zweite Bremssteuerungseinheit zwischen der ersten Bremssteuerungseinheit und dem Elektromotor angeordnet ist. Hierdurch kann ein weiter vereinfachter Aufbau der Vorrichtung und/oder eine weiter vereinfachte Anbindung der jeweiligen Einheiten in Bezug auf den Elektromotor erzielbar sein. Insbesondere kann hierdurch eine noch effizientere Trennung der einzelnen Einheiten in Bezug auf den Elektromotor realisierbar sein.

Es kann vorgesehen sein, dass die erste Bremssteuerungseinheit zumindest ein Sicherheitsschaltelement aufweist, mittels welchem die Motorsteuerungseinheit von dem Elektromotor elektrisch trennbar ist. Mittels des zumindest einen Sicherheitsschaltelements kann die Motorsteuerungseinheit auf einfache Weise von dem Elektromotor und/oder der ersten Bremssteuerungseinheit selbst trennbar und/oder verbindbar sein, wodurch insbesondere eine funktionale Trennung der Motorsteuerungseinheit und der ersten Bremssteuerungseinheit gewährleistbar sein kann.

Zusätzlich oder alternativ kann es vorgesehen sein, dass die Motorsteuerungseinheit zwischen einem Aktiviert-Zustand, in welchem die Motorsteuerungseinheit mit dem Elektromotor verbunden ist, und einem Deaktiviert-Zustand schaltbar ist, in welchem die Motorsteuerungseinheit mit dem Elektromotor nicht verbunden ist. Indem die Motorsteuerungseinheit derart integral konfiguriert sein kann, dass sie zwischen den besagten Zuständen bei Bedarf hin und/oder her schaltbar sein kann, kann ein weiter vereinfachter Aufbau der Vorrichtung erzielbar sein und/oder in Verbindung mit dem Sicherheitsschaltelement der ersten Bremssteuerungseinheit kann eine Zuverlässigkeit und/oder Betriebssicherheit in Bezug auf eine funktionale Trennung der Motorsteuerungseinheit und der ersten Bremssteuerungseinheit weiter gesteigert werden.

Es kann vorgesehen sein, dass die erste Bremssteuerungseinheit zumindest ein passives elektronisches Element mit einem elektrischen Widerstand und zumindest ein Schaltelement aufweist, mittels welchem das zumindest eine passive elektronische Element mit dem Elektromotor elektrisch verbindbar ist, wobei insbesondere, wenn das zumindest eine passive elektronische Element mit dem Elektromotor elektrisch verbunden ist, eine Sicherheitsbremskraft der passiven Bremseinrichtung durch den elektrischen Widerstand des zumindest einen passiven elektronischen Elements einstellbar und/oder steuerbar ist. Hierduch kann eine bzw. die Sicherheitsbremskraft auf eine zuverlässige Weise bewirkbar sein. Insbesondere aufgrund der Verwendung von zumindest einem passiven elektronischen Element mit einem elektrischen Widerstand, insbesondere in Form eines elektrischen Widerstand-Elements, kann ein robuster und ausfallsicherer Aufbau realisiert sein.

Es kann vorgesehen sein, dass die erste Bremssteuerungseinheit einen Phasenhalter aufweist, welcher zumindest ein Halteschaltelement umfasst, mittels welchem eine Sicherheitsstromversorgung zu dem Elektromotor schaltbar ist für eine Aufrechterhaltung der Sicherheitsbremskraft der passiven Bremseinrichtung. Mittels des Phasenhalters kann eine Motorposition des Elektromotors auf eine einfache Weise gehalten werden, wodurch die Aufrechterhaltung der Sicherheitsbremskraft der passiven Bremseinrichtung gewährleistbar sein kann, ohne hierfür weitere Einrichtungen zu benötigen.

Es kann vorgesehen sein, dass die Sicherheitsstromversorgung von einer Stromversorgung verschieden ist, welche über die Motorsteuerungseinheit zu dem Elektromotor schaltbar ist. Hierdurch kann eine Ausfallsicherheit der Vorrichtung weiter verbessert werden.

Es kann vorgesehen sein, dass die erste Bremssteuerungseinheit mittels des zumindest einen Schaltelements und des zumindest einen Halteschaltelements zwischen einem Aktiviert-Zustand, in welchem die erste Bremssteuerungseinheit mit dem Elektromotor verbunden ist, und einem Deaktiviert-Zustand schaltbar ist, in welchem die erste Bremssteuerungseinheit mit dem Elektromotor nicht verbunden ist. Hierdurch kann die erste Bremssteuerungseinheit von den übrigen Einheiten einfach trennbar und/oder verbindbar sein.

Es kann vorgesehen sein, dass die zweite Bremssteuerungseinheit zumindest ein Parkschaltelement aufweist, mittels welchem die Motorsteuerungseinheit und/oder die erste Bremssteuerungseinheit von dem Elektromotor elektrisch trennbar ist. Indem mittels der zweiten Bremssteuerungseinheit die Motorsteuerungseinheit und/oder die erste Bremssteuerungseinheit von dem Elektromotor elektrisch trennbar sein können, kann auf eine einfache Weise eine hohe Bremsfunktionspriorität der zweite Bremssteuerungseinheit erzielbar sein im Vergleich zu der Motorsteuerungseinheit und/oder der ersten Bremssteuerungseinheit.

Ferner wird die eingangs genannte Aufgabe erfindungsgemäß gelöst durch ein Bremssystem. Danach ist vorgesehen, dass das Bremssystem aufweist:
- zumindest eine Vorrichtung zur Steuerung einer passiven Bremseinrichtung, insbesondere einer passiven elektromechanischen Bremseinrichtung, welche wie vorstehend und/oder nachstehend beschrieben konfiguriert ist; und
- zumindest eine passive Bremseinrichtung, insbesondere eine passive elektromechanische Bremseinrichtung, welche der besagten Vorrichtung zugeordnet ist und welche zumindest einen Federkraftbremsaktor zum Erzeugen einer Federkraft aufweist.

Darüber hinaus wird die eingangs genannte Aufgabe erfindungsgemäß gelöst durch ein Verfahren zum Steuerung einer passiven Bremseinrichtung, insbesondere einer passiven elektromechanischen Bremseinrichtung. Danach ist vorgesehen, dass das Verfahren mittels einer Vorrichtung zur Steuerung einer passiven Bremseinrichtung, insbesondere einer passiven elektromechanischen Bremseinrichtung, welche wie vorstehend und/oder nachstehend beschrieben konfiguriert ist, durchführbar ist oder mittels eines Bremssystems, welches wie vorstehend und/oder nachstehend beschrieben konfiguriert ist, durchführbar ist. Ferner umfasst das Verfahren zumindest einen der folgenden Schritte:
- Durchführen einer Betriebsbremsung und/oder einer Notbremsung, indem zumindest die Motorsteuerungseinheit mit dem Elektromotor verbunden ist oder wird und die erste Bremssteuerungseinheit von dem Elektromotor getrennt ist oder wird; und/oder
- Durchführen einer Sicherheitsbremsung, indem zumindest die Motorsteuerungseinheit von dem Elektromotor getrennt ist oder wird und die erste Bremssteuerungseinheit mit dem Elektromotor verbunden ist oder wird; und/oder
- Durchführen einer Parkbremsung, indem zumindest die Motorsteuerungseinheit von dem Elektromotor getrennt ist oder wird und die erste Bremssteuerungseinheit von dem Elektromotor getrennt ist oder wird.

Es kann vorgesehen sein, dass beim Durchführen der Betriebsbremsung und/oder der Notbremsung die erste Bremssteuerungseinheit von dem Elektromotor getrennt ist oder wird mittels zumindest eines Schaltelements und zumindest eines Halteschaltelements der ersten Bremssteuerungseinheit.

Es kann vorgesehen sein, dass beim Durchführen der Sicherheitsbremsung die Motorsteuerungseinheit von dem Elektromotor getrennt ist oder wird mittels zumindest eines Sicherheitsschaltelements der ersten Bremssteuerungseinheit und/oder mittels Umschaltens der Motorsteuerungseinheit in einen Deaktiviert-Zustand.

Es kann vorgesehen sein, dass beim Durchführen der Parkbremsung die Motorsteuerungseinheit von dem Elektromotor getrennt ist oder wird und die erste Bremssteuerungseinheit von dem Elektromotor getrennt ist oder wird jeweils mittels zumindest eines Parkschaltelements der zweiten Bremssteuerungseinheit.

Es sollte verstanden sein, dass jegliche strukturellen und/oder funktionalen Merkmale und/oder Eigenschaften und/oder Vorteile, die im Zusammenhang mit der Vorrichtung beschrieben sind und/oder werden, auch Teil des besagten Bremssystems und/oder des besagten Verfahrens sein können und/oder diesen jeweilig zuordenbar sein können. Ferner sollte verstanden sein, dass dies jeweilig ebenfalls umgekehrt gelten kann.

Weitere Einzelheiten und Vorteile der Erfindung sollen nun anhand eines in der Zeichnung dargestellten Ausführungsbeispiels näher erläutert werden.

Es zeigen:
- Fig. 1: ein schematisches Blockdiagramm einer Bremssteuerung einer passiven elektromechanischen Bremse; und
- Fig. 2: ein detailliertes schematisches Blockdiagramm von Fig. 1.

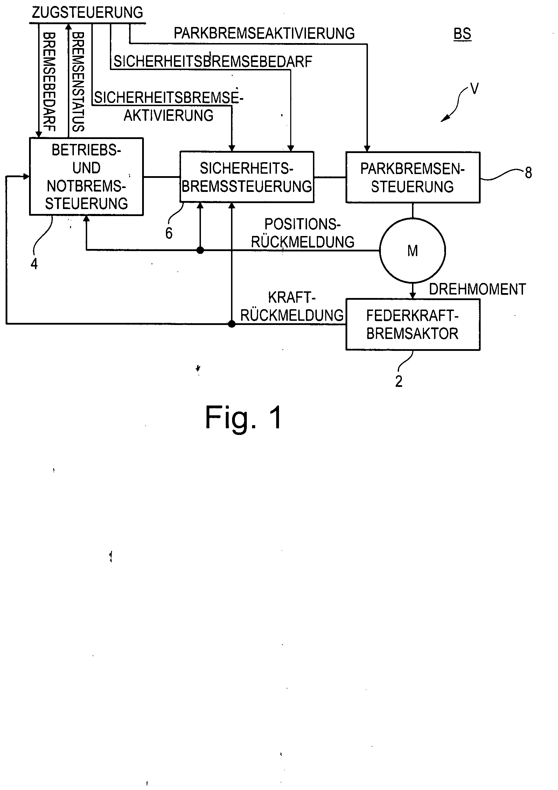

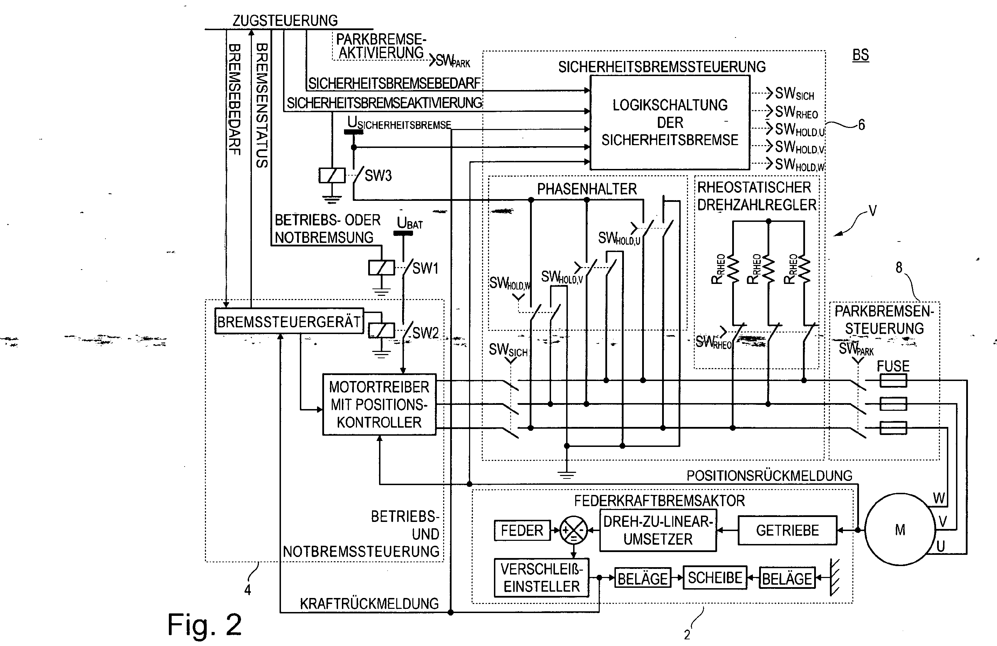

Bezugnehmend auf Fig. 1 und 2 weist ein Bremssystem BS eine Vorrichtung V zur Steuerung einer passiven Bremseinrichtung 2 und die passive Bremseinrichtung 2 auf.

Die passive Bremseinrichtung 2 ist als Federkraftbremsaktor konfiguriert (vgl. Fig. 1 und 2).

Wie insbesondere in Fig. 1 erkennbar ist, weist die Vorrichtung V einen Elektromotor M, eine Motorsteuerungseinheit 4, eine erste Bremssteuerungseinheit 6 und eine zweite Bremssteuerungseinheit 8 auf.

Der Elektromotor M dient zum Lösen der passiven Bremseinrichtung 2 gegen eine Federkraft.

Der Elektromotor M ist in dem vorliegenden Ausführungsbeispiel ein dauermagnetischer, bürstenloser Gleichstrommotor.

Mittels des Elektromotors M ist ein Drehmoment erzeugbar, welches durch die passive Bremseinrichtung 2 aufnehmbar ist. **In** anderen Worten ist der Elektromotor M mit der passiven Bremseinrichtung 2 diesbezüglich, d.h. zur Übertragung eines bzw. des Drehmoments, funktionsverbunden.

Die Motorsteuerungseinheit 4 dient zur Steuerung des Elektromotors (M) für eine Betriebsbremsung und/oder eine Notbremsung.

Die Motorsteuerungseinheit 4 ist als Betriebs- und Notbremssteuerung realisiert (vgl. Fig. 1 und 2).

Die Motorsteuerungseinheit 4 ist mit dem Elektromotor M trennbar elektrisch verbunden.

Die erste Bremssteuerungseinheit 6 dient einer Sicherheitsbremsung.

Die erste Bremssteuerungseinheit 6 ist als Sicherheitsbremssteuerung realisiert (vgl. Fig. 1 und 2).

Die erste Bremssteuerungseinheit 6 ist mit dem Elektromotor M trennbar elektrisch verbunden.

Die zweite Bremssteuerungseinheit 8 dient einer Parkbremsung.

Die zweite Bremssteuerungseinheit 8 ist als Parkbremsensteuerung realisiert (vgl. Fig. 1 und 2).

Die zweite Bremssteuerungseinheit 8 ist mit dem Elektromotor trennbar elektrisch verbunden.

Die erste Bremssteuerungseinheit 6 ist zwischen der Motorsteuerungseinheit 4 und dem Elektromotor M angeordnet und die zweite Bremssteuerungseinheit 8 ist zwischen der Motorsteuerungseinheit 4 und dem Elektromotor M angeordnet.

Insbesondere ist die erste Bremssteuerungseinheit 6 zwischen der Motorsteuerungseinheit 4 und der zweiten Bremssteuerungseinheit 8 angeordnet und die zweite Bremssteuerungseinheit 8 ist zwischen der ersten Bremssteuerungseinheit 6 und dem Elektromotor M angeordnet.

Der Elektromotor 4 ist mit der Motorsteuerungseinheit 4 und der ersten Bremssteuerungseinheit 6 signaltechnisch verbunden, um eine Positionsrückmeldung des Elektromotors M übermitteln zu können.

Die passive Bremseinrichtung 2 ist mit der Motorsteuerungseinheit 4 und der ersten Bremssteuerungseinheit 6 signaltechnisch verbunden, um eine Kraftrückmeldung der passiven Bremseinrichtung 2 übermitteln zu können.

Wie insbesondere in Fig. 1 erkennbar ist, ist das Bremssystem BS, insbesondere die Vorrichtung V, mit einer insbesondere übergeordneten Zugsteuerung signaltechnisch verbindbar und/oder verbunden.

Insbesondere ist die Motorsteuerungseinheit 4 mit der Zugsteuerung signaltechnisch verbindbar und/oder verbunden, um ein Bremsebedarf-Signal von der Zugsteuerung empfangen zu können und/oder ein Bremsenstatus-Signal an die Zugsteuerung übermitteln zu können.

Die erste Bremssteuerungseinheit 6 ist mit der Zugsteuerung signaltechnisch verbindbar und/oder verbunden, um ein Sicherheitsbremseaktivierung-Signal von der Zugsteuerung empfangen zu können und/oder ein Sicherheitsbremsebedarf-Signal von der Zugsteuerung empfangen zu können.

Die zweite Bremssteuerungseinheit 8 ist mit der Zugsteuerung signaltechnisch verbindbar und/oder verbunden, um ein Parkbremseaktivierung-Signal von der Zugsteuerung empfangen zu können.

Die Betriebsbremsung und/oder die Notbremsung mittels der Motorsteuerungseinheit 4, die Sicherheitsbremsung mittels der ersten Bremssteuerungseinheit 6 und die Parkbremsung mittels der zweiten Bremssteuerungseinheit 8 sind funktional unabhängig zueinander aktivierbar.

Im Folgenden soll nun insbesondere auf Fig. 2 eingegangen werden, in welcher das in Fig. 1 gezeigte detaillierter dargestellt ist. Es sollte verstanden sein, dass sich die vorangegangene Beschreibung bezüglich Fig. 1 in gleicher Weise auf Fig. 2 bezieht, weshalb nun insbesondere die näheren Details beschrieben werden sollen.

Wie in Fig. 2 gezeigt ist, sind dem Bremsystem BS, insbesondere der passiven Bremseinrichtung 2, ferner eine oder mehrere Scheiben, insbesondere Bremsscheiben, und zu jeder Scheibe jeweils ein Paar von Belägen, insbesondere Bremsbelägen, zugeordnet und/oder das Bremssystem BS, insbesondere die passive Bremseinrichtung 2, umfasst eben solche.

Die jeweiligen Bremsscheiben sind konfiguriert, um gegen die Bremsscheibe drückbar zu sein oder gedrückt zu werden zur Betätigung oder Aufrechterhaltung einer Bremsung, insbesondere mittels einer bzw. der Feder, welche in dem Bremssystem BS, insbesondere der passiven Bremseinrichtung 2, umfasst und/oder diesem zugeordnet ist.

In anderen Worten ist/wird eine eine Bremskraft erzeugbar/erzeugt, indem die zwei Bremsbeläge gegen die insbesondere rotierende Bremsscheibe drückbar sind/gedrückt werden, insbesondere mittels einer bzw. der Feder, welche in dem Bremssystem BS, insbesondere der passiven Bremseinrichtung 2, umfasst und/oder diesem zugeordnet ist.

Ein Verschleißeinsteller bzw. Verschleißnachsteller, welcher in dem Bremssystem BS, insbesondere der passiven Bremseinrichtung 2, umfasst und/oder diesem zugeordnet ist, ist mit der besagten Feder und den Bremsbelägen und/oder der Bremsscheibe wirkverbunden, insbesondere zwischen diesen eingerichtet.

Mittels des Verschleißnachstellers ist verhinderbar oder wird verhindert, dass eine/die Federkraft der besagten Feder durch den Verschleiß von Belägen und Scheibe verringert wird.

Das Bremssystem BS, insbesondere die passive Bremseinrichtung 2, umfasst ferner einen Dreh-zu-Linear-Umsetzer zum Umwandeln eines Drehmoments in eine Kraft.

Mittels des Dreh-zu-Linear-Umsetzers ist ein mittels des Elektromotors M erzeugbares oder erzeugtes Drehmoment in eine Kraft umwandelbar, welche gegen die Feder (bzw. die Federkraft der Feder) wirkt und/oder wirken kann.

In dem vorliegenden Ausführungsbeispiel umfasst das Bremsystem BS, insbesondere die passive Bremseinrichtung 2, ferner ein Getriebe, welches zwischen den Elektromotor M und den Dreh-zu-Linear-Umsetzer geschaltet ist und/oder dort angeordnet ist.

Mittels des Getriebes ist eine Verstärkung des Motordrehmoments des Elektromotors M erzielbar, welches in dem vorliegenden Anwendungsfall des Bremsystems BS benötigt sein kann.

Es ist auch denkbar, dass das Bremssystem BS, insbesondere die passive Bremseinrichtung 2, ohne ein solches Getriebe konfiguriert ist.

Wie in Fig. 2 erkennbar ist, weist der Elektromotor M mehrere Motorwicklungen U, V, W auf. In dem vorliegenden Ausführungsbeispiel weist der Elektromotor drei Motorwicklungen U, V, W auf, wobei allerdings jede andere insbesondere technisch sinnvolle Anzahl von Motorwicklungen denkbar sein können.

Wie ferner in Fig. 2 erkennbar ist, ist die Motorsteuerungseinheit 4 mit einer zentralen Stromversorgung U_Bat trennbar verbunden. Ein erstes Schaltelement SW1 des Bremssystems BS, insbesondere der Vorrichtung V, ist mit der Zugsteuerung signaltechnisch verbunden, um die Motorsteuerungseinheit 4 von der Stromversorgung U_Bat trennen zu können.

Die Motorsteuerungseinheit 4 weist ein Bremssteuergerät, ein zweites Schaltelement SW2, und einen Motortreiber mit Positionskontroller auf.

Das Bremssteuergerät ist mit dem zweiten Schaltelement SW2 verbunden, mittels welchem die Motorsteuerungseinheit 4, insbesondere der Motortreiber mit Positionskontroller, von der Stromversorgung U_Bat trennbar ist.

Das Bremssteuergerät ist konfiguriert, um die besagte Kraftrückmeldung der passiven Bremseinrichtung 2 zu empfangen und um das besagte Bremsebedarf-Signal von der Zugsteuerung empfangen zu können und das besagte Bremsenstatus-Signal an die Zugsteuerung übermitteln zu können.

Das erste und das zweite Schaltelement SW1, SW2 sind in Reihe angeordnet.

Der Motortreiber mit Positionskontroller ist konfiguriert, um die besagte Positionsrückmeldung der passiven Bremseinrichtung 2 zu empfangen.

Der Motortreiber mit Positionskontroller ist mit den mehreren Motorwicklungen U, V, W des Elektromotors M jeweilig verbunden.

Wie in Fig. 2 ferner erkennbar ist, weist die erste Bremssteuerungseinheit 6 eine insbesondere integrierte Logikschaltung der Sicherheitsbremse, ein Sicherheitsschaltelement SW_Sich, einen Phasenhalter, zumindest ein passives elektronisches Element R_Rheo mit einem elektrischen Widerstand und zumindest ein Schaltelement SW_Rheo auf.

Die insbesondere integrierte Logikschaltung der Sicherheitsbremse ist mit der Zugsteuerung signaltechnisch verbindbar und/oder verbunden, um das Sicherheitsbremseaktivierung-Signal von der Zugsteuerung empfangen zu können und/oder das Sicherheitsbremsebedarf-Signal von der Zugsteuerung empfangen zu können.

Die insbesondere integrierte Logikschaltung der Sicherheitsbremse ist mit der passiven Bremseinrichtung 2 signaltechnisch verbunden, um die Kraftrückmeldung der passiven Bremseinrichtung 2 empfangen zu können.

Die insbesondere integrierte Logikschaltung der Sicherheitsbremse ist mit dem Elektromotor M signaltechnisch verbunden, um die Positionsrückmeldung des Elektromotors M empfangen zu können.

Die insbesondere integrierte Logikschaltung der Sicherheitsbremse ist mit einer Sicherheitsstromversorgung U_Sicherheitsbremse verbunden.

Der Phasenhalter ist mit der Sicherheitsstromversorgung U_Sicherheitsbremse trennbar verbunden über ein drittes Schaltelement SW3. Das heißt, das Bremssystem BS, insbesondere die Vorrichtung V, weist ein bzw. das dritte Schaltelement SW3 auf, mittels welchem die erste Bremssteuerungseinheit 6, insbesondere der Phasenhalter, von der Sicherheitsstromversorgung U_Sicherheitsbremse trennbar ist.

Die Sicherheitsstromversorgung U_Sicherheitsbremse und die zentrale Stromversorgung U_Bat sind verschiedene Stromversorgungen, welche insbesondere zum einen über die Motorsteuerungseinheit 4 und zum anderen über die erste Bremssteuerungseinheit 6 zu dem Elektromotor M jeweilig zugeordnet schaltbar sind (via der Motorwicklungen U, V, W).

Die insbesondere integrierte Logikschaltung der Sicherheitsbremse ist mit den jeweiligen, insbesondere allen, Schaltelementen SW_Sich, SW_Rheo, SW_Hold,U, SW_Hold,V, SW_Hold,W der ersten Bremssteuerungseinheit 6 insbesondere signaltechnisch verbunden und ist konfiguriert, diese zu schalten.

Das zumindest eine Sicherheitsschaltelement SW_Sich ist vorliegend genau ein Sicherheitsschaltelement SW_Sich, welches an die jeweiligen Motorwicklungen U, V, W des Elektromotors M angeschlossen ist und mittels welchem die Motorsteuerungseinheit 4 von dem Elektromotor M elektrisch trennbar ist.

Zusätzlich oder alternativ ist es auch denkbar, dass die Motorsteuerungseinheit 4 zwischen einem Aktiviert-Zustand, in welchem die Motorsteuerungseinheit 4 mit dem Elektromotor M verbunden ist, und einem Deaktiviert-Zustand schaltbar ist, in welchem die Motorsteuerungseinheit 4 mit dem Elektromotor M nicht verbunden ist. Dies kann in dem Bremssteuergerät und/oder in dem Motortreiber mit Positionskontroller implementiert sein.

Das zumindest eine passive elektronische Element R_Rheo mit einem elektrischen Widerstand umfasst vorliegend drei passive elektronische Elemente R_Rheo mit einem elektrischen Widerstand, welche jeweilg einer der Motorwicklungen U, V, W zugeordnet und verbunden sind.

Das zumindest eine Schaltelement SW_Rheo ist als Normally-Closed-Schaltelement konfiguriert und kann die passiven elektronischen Elemente R_Rheo mit den Motorwicklungen U, V, W des Elektromotors M verbinden.

Wenn die passiven elektronischen Elemente R_Rheo mit dem Elektromotor M elektrisch verbunden ist, ist eine Sicherheitsbremskraft der passiven Bremseinrichtung 2 durch den elektrischen Widerstand des zumindest einen passiven elektronischen Elements R_Rheo einstellbar und/oder steuerbar.

Die passiven elektronischen Elemente R_Rheo und das Schaltelement SW_Rheo definieren vorliegend einen rheostatischen Drehzahlregler.

In anderen Worten umfasst die erste Bremssteuereinheit 6 einen rheostatischen Drehzahlregler, der das zumindest eine passive elektronische Element R_Rheo mit einem elektrischen Widerstand und das zumindest eine Schaltelement SW_Rheo aufweist.

Zwischen dem rheostatischen Drehzahlregler und dem Sicherheitsschaltelement SW_Sich ist der Phasenhalter angeordnet und mit den Motorwicklungen U, V, W verbunden.

Der Phasenhalter weist pro Motorwicklung U, V, W ein Halteschaltelement SW_Hold,U, SW_Hold,V, SW_Hold,W auf, mittels welchem die Sicherheitsstromversorgung U_ Sicherheitsbremse zu dem Elektromotor M schaltbar ist für eine Aufrechterhaltung der Sicherheitsbremskraft der passiven Bremseinrichtung 2.

In anderen Worten, zusätzlich oder alternativ zu dem Sicherheitsschaltelement SW_Sich, ist die erste Bremssteuerungseinheit 6 mittels des zumindest einen Schaltelements SW_Rheo und des zumindest einen Halteschaltelements SW_Hold,U, SW_Hold,V, SW_Hold,W zwischen einem Aktiviert-Zustand, in welchem die erste Bremssteuerungseinheit 6 mit dem Elektromotor M verbunden ist, und einem Deaktiviert-Zustand schaltbar ist, in welchem die erste Bremssteuerungseinheit 6 mit dem Elektromotor M nicht verbunden ist.

Die zweite Bremssteuerungseinheit 8 weist ein Parkschaltelement und, optional, pro Motorwicklung ein in der Fig. 2 mit Fuse gekennzeichnetes Sicherungselement auf.

Mittels des Parkschaltelements SW_Park ist die Motorsteuerungseinheit 4 und die erste Bremssteuerungseinheit 6 von dem Elektromotor M elektrisch trennbar ist.

Hierzu ist die zweite Bremssteuerungseinheit 8 mit der Zugsteuerung signaltechnisch verbindbar und/oder verbunden, um ein Parkbremseaktivierung-Signal von der Zugsteuerung empfangen zu können (für ein Trennen).

Die zuvor beschrieben Vorrichtung V und/oder das zuvor beschriebene Bremssystem BS kann demnach wiefolgt betreibbar sein bzw. es kann wiefolgt verfahren werden:
Eine Betriebsbremsung und/oder eine Notbremsung ist durchführbar, indem zumindest die Motorsteuerungseinheit 4 mit dem Elektromotor M verbunden ist oder wird und die erste Bremssteuerungseinheit 6 von dem Elektromotor M getrennt ist oder wird.

Zusätzlich oder alternativ ist eine Sicherheitsbremsung durchführbar, indem zumindest die Motorsteuerungseinheit 4 von dem Elektromotor M getrennt ist oder wird und die erste Bremssteuerungseinheit 6 mit dem Elektromotor M verbunden ist oder wird.

Zusätzlich oder alternativ ist eine Parkbremsung durchführbar, indem zumindest die Motorsteuerungseinheit 4 von dem Elektromotor M getrennt ist oder wird und die erste Bremssteuerungseinheit 6 von dem Elektromotor M getrennt ist oder wird.

Beim Durchführen der Betriebsbremsung und/oder der Notbremsung ist oder wird die erste Bremssteuerungseinheit 6 von dem Elektromotor M getrennt mittels zumindest eines Schaltelements SW_Rheo und zumindest eines Halteschaltelements SW_Hold,U, SW_Hold,V, SW_Hold,W der ersten Bremssteuerungseinheit 6.

Beim Durchführen der Sicherheitsbremsung ist oder wird die Motorsteuerungseinheit 4 von dem Elektromotor M getrennt mittels zumindest eines Sicherheitsschaltelements SW_Sich der ersten Bremssteuerungseinheit 6 und/oder mittels Umschaltens der Motorsteuerungseinheit 4 in einen Deaktiviert-Zustand.

Beim Durchführen der Parkbremsung ist oder wird die Motorsteuerungseinheit 4 von dem Elektromotor M getrennt und die erste Bremssteuerungseinheit 6 ist oder wird von dem Elektromotor M getrennt jeweils mittels zumindest eines Parkschaltelements SW_Park der zweiten Bremssteuerungseinheit 8.

Während der Bremsfunktionen Betriebsbremsung und Notbremsung des Bremssystems BS ist bzw. wird der Elektromotor M von dem motortreiber mit Positionskontroller steuerbar bzw. gesteuert. Eine geforderte Position wird von dem Bremssteuergerät auf der Grundlage einer bzw. der Kraftrückmeldung und der Anforderungen der Zugsteuerung berechnet. Die Bremsfunktion Parkbremse ist vorliegend durch eine vollständige Entregung des Systems erzielbar.

Bei der Betriebsbremsung regelt der Motortreiber die Motorposition, um die gewünschte Bremskraft mit einem gewünschten Kraftaufbaugradienten zu erreichen. Die Notbremsung erfolgt nach einem ähnlichen Verfahren, jedoch in der Regel mit einer höherem Kraftaufbaugradienten aufgrund einer höheren Verzögerung und ein entstehender Bremsruck wird bei der Notbremsung akzeptiert. Der Gradient ist nach oben limitiert, um die Beschleunigung und den Ruck für Personen und Rad-Schienenkontakt auf einem akzeptableren Level zu halten.

Die Sicherheitsbremsung wird mit den passiven elektronischen Elementen R_Rheo, d.h. vorliegend Widerständen, realisiert, die über das Schaltelement SW_Rheo mit den Motorwicklungen U, V, W verbunden sind, um ihre Anwendung zu modulieren; sie arbeiten daher als rheostatischer Geschwindigkeitsregler, um die von der Feder der Bremseinrichtung 2 gelieferte Leistung zu reduzieren. Wenn die Bremskraft die gewünschte Sicherheitsbremskraft erreicht hat, wird die Motordrehzahl reduziert, und eine Phase wird erregt, um die Motorposition zu halten. Die Funktion der Sicherheitsbremsung ist funktional unabhängig von der Betriebsbrems-/Notbremsfunktion ausgeführt. Ein Fehler in der Betriebsbrems-/Notbremsfunktion beeinflußt die Sicherheitsbremsfunktion nicht. Das wird entweder durch das beschriebene Schaltelement SW_Sich zwischen Betriebsbrems-/Notbremsfunktion und der Sicherheitsbremsfunktion sichergestellt und/oder eine Treiberstufe des Motortreibers der Betriebsbrems-/Notbremsfunktion ist so ausgeführt sein kann, dass sie so deaktivierbar ist, dass die Sicherheitsbremsfunktion immer noch funktioniert.

Bei der Parkbremsung wird der Elektromotor M einfach stromlos geschaltet, so dass die Feder die Bremskraft für einen unbegrenzten Zeitraum liefern.

Die Funktion der Parkbremse ist funktional unabhängig von der Betriebsbrems-/Notbremsfunktion und der Sicherheitsbremsfunktion ausgeführt. Ein Fehler in der Betriebsbrems-/Notbremsfunktion oder der Sicherheitsbremsfunktion beeinflusst die Parkbremsfunktion nicht. Das wird entweder durch die beschriebenen Schaltelemente SW_Sich, SW_PArk zwischen Betriebsbrems-/Notbremsfunktion und der Sicherheitsbremsfunktion und der Parkbremsfunktion sichergestellt oder die Treiberstufe des Motortreibers der Betriebsbrems-/Notbremsfunktion und die Funktionsstufen (Phasenhalter und Rheostatische Bremse) sind so ausgeführt, dass sie so deaktiviert werden können, dass die Abstellbremsfunktion immer noch sicher funktioniert.

Aufgrund ihrer Position im Ansteuerstromkreis der Motorwicklungen U, V, W oder durch die beschriebenen Schaltelemente oder durch konstruktive Merkmale der Funktionseinheiten der beschriebenen Einheiten entsteht eine Priorität der Bremsfunktionen.

Hierbei kann die Parkbremsung eine Priorität 1, insbesondere eine höchste Priorität, haben.

Die Sicherheitsbremsung kann (dann) eine Priorität 2 und die Betriebs- und Notbremsung kann (dann) eine Priorität 3 haben.

### Priorität 1 - Parkbremsung:

Die Parkbremssteuerung, d.h. die zweite Bremssteuerungseinheit 8, ist funktional direkt an den Motorwicklungen U, V, W angeordnet und lässt sich nicht von den anderen Bremsfunktionen stören. Das wird entweder durch eine Trenneinheit (z.b. Schaltkontakte oder elektronische Schaltelemente, z.B. die zuvor beschriebenen Schaltelemente) zwischen Betriebsbrems-/Notbremsfunktion und Sicherheitsbremsfunktion und der Parkbremsfunktion sichergestellt oder die Treiberstufe des Motortreibers der Betriebsbrems-/Notbremsfunktion und die Funktionsstufen (Phasenhalter und Rheostatische Bremse) sind so ausgeführt, dass sie so deaktiviert werden können, dass die Parkbremsfunktion immer noch sicher funktioniert.

Die Trenneinheit (oder Deaktiviereinheiten der anderen Funktionseinheiten) ist nach dem Fail-Safe Prinzip so gestaltet, dass kein Strom durch die Motorwicklungen U, V, W fließen kann (oder nur ein so geringer, dass dieses Prinzip nicht verhindert wird), dass der Dreh-zu-Linear-Umsetzer durch die Feder soweit zurück gedrückt wird (und der Elektromotor M sich in eine Nulllage zurückdreht), wenn das Parkbrems-Ansteuersignal, d.h. das Parkbremseaktivierung-Signal, energielos wird.

Das Abstellbrems-Ansteuersignal (Parkbremseaktivierung, binäres Signal, Low-Aktiv) ist/wird von der Zugsteuerung erzeugbar/erzeugt und führt dabei auch die Energie um die Trenneinheit (oder Deaktiviereinheiten der anderen Funktionseinheiten) bei nicht aktivierter Parkbremsung inaktiv zu halten.

### Priorität 2 - Sicherheitsbremsung:

Die Sicherheitsbremssteuerung, d.h. die erste Bremssteuerungseinheit 6, ist funktional zwischen der Parkbremsensteuerung, d.h. der zweiten Bremssteuerungseinheit 8, und der Betriebs- und Notbremssteuerung, d.h. der Motorsteuerungseinheit 4, angeordnet, so dass die Parkbremsensteuerung eine höhere Priorität als die Sicherheitsbremssteuerung erhält und somit eine Parkbremsung unabhängig von einer Sicherheitsbremsung (oder Betriebsbremsung) ausgeführt werden kann. Das gilt auch wenn die Sicherheitsbremsfunktion (oder Betriebsbremsfunktion) einen Defekt aufweist.

Die funktionale Unabhängigkeit der Sicherheitsbremsfunktion von der Betriebsbrems-/Notbremsfunktion wird entweder durch eine Trenneinheit (z.b. Schaltkontakte oder elektronische Schaltelemente, z.B. die zuvor beschriebenen Schaltelemente) zwischen Betriebsbrems-/Notbremsfunktion und der Sicherheitsbremsfunktion sichergestellt oder die Treiberstufe des Motortreibers der Betriebsbrems-/Notbremsfunktion ist so ausgeführt, dass sie so deaktiviert werden kann, dass die Sicherheitsbremsfunktion immer noch sicher funktioniert.

Die Trenneinheit (oder Deaktiviereinheiten der anderen Funktionseinheiten) ist nach dem Fail-Safe Prinzip so gestaltet, dass kein Strom aus der Betriebsbrems-/Notbremsfunktion durch die Motorwicklungen U, V, W fließen kann (oder nur ein so geringer, dass dieses Prinzip nicht verhindert wird), dass der Dreh-zu-Linear-Umsetzer durch die Feder soweit zurück gedrückt wird, bis die notwendige Sicherheitsbremskraft erreicht wird.

Dieses Zurückdrücken der Feder und damit verbundene Zurückdrehen des Motors wird über eine bzw. die bereits beschriebene rheostatische Bremsfunktionseinheit so stark verlangsamt, so dass ein bestimmter Bremskraftgradient nicht überschritten wird.

Dann wird der Phasenhalter bzw. die Phasenhalter-Stufe aktiviert, um diese Motorposition zu halten und dadurch auch die Sicherheitsbremskraft im angeforderten Bereich zu halten.

Das Sicherheitsbrems-Ansteuersignal (Sicherheitsbremseaktivierung, binäres Signal, Low-Aktiv) ist/wird von der Zugsteuerung erzeugbar/erzeugt und führt dabei auch die Energie um die Trenneinheit (oder Deaktiviereinheiten der anderen Funktionseinheiten) bei nicht aktivierter Sicherheitsbremse inaktiv zu halten.

Zusätzlich zum Sicherheitsbrems-Ansteuersignal kann das Sicherheitsbremsebedarf-Signal von der Zugsteuerung ausgewertet werden, um eine lastkorrigierte Sicherheitsbremsung auszuführen. Die Kraftregelung kann auf einem Kraftsensor (Kraftrückmeldung, Analogsignal) und/oder auf dem Motorpositionssensor (Positionsrückmeldung, Analogsignal) basieren, wie in Fig. 2 schematisch dargestellt ist.

### Priorität 3 - Betriebs- und Notbremsung:

Die Betriebs- und Notbremssteuerung, d.h. die Motorsteuerungseinheit 4, steuert den Elektromotor M, wenn keine Sicherheits- oder Abstellbremsanforderung vorliegt. Die Motorsteuerungseinheit 4 erhält die Bremsanforderung (Bremsebedarf, mehrere Signale) von der Zugsteuerung.

Dieses Bremseanforderungssignal enthält die Bremskraftanforderung und ob es sich um eine Not- oder Betriebsbremsung handelt oder ob die Bremse gelöst werden muss.

Wie in Fig. 2 schematisch dargestellt ist, wird die Bremskraft direkt über den Kraftsensor (Kraftrückmeldung, analoges Signal) oder indirekt über den Motorpositionssensor (Positionsrückmeldung, analoges Signal) gesteuert.

Der Bremsenstatus (Bremsstatus-Signal, mehrere Signale) enthält verschiedene Informationen für die Zugsteuerung, z.B. "Bremse gelöst", "voll betätigt" oder "Fehler".

Wie Fig. 2 zu entnehmen ist, sind dort der Steuerkreis und die Bremsbetätigung detaillierter dargestellt. Wie bei hydraulischen oder pneumatischen Reibungsbremsen wird die Bremskraft durch Anpressen von zwei Bremsbelägen an eine rotierende Scheibe erzeugt; anstelle eines Kolbens arbeitet jedoch ein Dreh-zu-Linear-Umsetzer gegen die Feder, indem er das Drehmoment vom Getriebe in eine lineare Kraft umwandelt, die gegen die Feder wirkt. Der Verschleißeinsteller bzw. Verschleißnachsteller verhindert, dass die Federkraft durch den Verschleiß der Beläge und der Scheibe verringert wird. Aufgrund des hohen Drehmoments, das für diesen Prozess erforderlich ist, wird ein Getriebe verwendet, um das Motordrehmoment zu verstärken.

Die Bremseinrichtung 2 ist so konstruiert, dass die Bremseinrichtung 2 dem Mittel (d.h. Feder) zum Aufbringen der Bremskraft entgegenwirkt, so dass der Elektromotor M vom Federspeicher-Bremsaktuator angetrieben wird, wenn die Motorphasen aus der Bremslösestellung deaktiviert werden. Wenn also eine Sicherheitsbremsung angefordert wird, liefert die Feder die Energie für den Aufbau der Bremskraft, aber die Steuerung der Sicherheitsbremsung, d.h. die erste Bremssteuerungseinheit 6, kann den Anlege-Gradienten der Bremskraft begrenzen und steuern (über den rheostatische Bremse der Motordrehzahl), um den Zugruck zu reduzieren und die Motorposition halten (über den Phasenhalter), damit nicht die volle (Feder-)Bremskraft erreicht wird.

Die gewünschte Sicherheitsbremskraft ist eine lastabhängige Variable, die nur unter bestimmten Umständen, z. B. bei langsamer Zuggeschwindigkeit, vor der Aktivierung der Sicherheitsbremsung und in einem gültigen Bereich geändert werden sollte und/oder wird.

Die Logikschaltung der Sicherheitsbremse steuert den Kraftgradienten durch Modulation des Schalters (SW_Rheo) der rheostatischen Widerstände (R_Rheo) zur Begrenzung der Motorgeschwindigkeit.

Wenn sich die Bremskraft der gewünschten Kraft nähert, wird die Motordrehzahl noch weiter reduziert, und dann wird eine Motorphase durch den entsprechenden Schalter (SW_Hold,U oder SW_Hold,V oder SW_Hold,W) erregt.

Der Motortreiberausgang wird getrennt, wenn die Sicherheitsbremsfunktionen ausgeführt werden (über SW_Sich).

Die Position, in der der Motor angehalten werden soll, wird über den Motorpositions-Ist-Wert oder über den Kraft-Ist-Wert gesteuert.

Die Betriebsfunktion Sicherheitsbremsung hat im Vergleich zur Betriebs-/Notbremsung eine höhere Funktionsfähigkeit, da sie auf der rheostatischen Bremsung des Motors zur Geschwindigkeitsregelung und einer offenen Phasenerregung zum Halten der gewünschten Bremskraft basiert.

Folglich wird die Sicherheitsbremsung ohne elektronische Kommutierung durchgeführt.

Da das Motorpositions-Feedback oder das Kraft-Feedback zur Regelung der Sicherheitsbremskraft verwendet werden kann, kann die Funktion auch bei einem Ausfall des Bremskraft- oder Motorpositionssensors ausgeführt werden.

Um eine größere Vielfalt zu erreichen, können (optional) die Bremsensteuereinheiten und der Motortreiber auf Mikrocontrollern und der Sicherheitsbremskreis auf feldprogrammierbaren Gate-Arrays (FPGAs) basieren. Die Sicherheits-Bremssteuerung verfügt über eine Phasenfehlererkennung (nicht in Fig. 2 gezeigt), um die als defekt erkannte Motorwicklungen (bei Unterbrechung oder Kurzschluss) über die Trenneinheit, d.h. die beschriebenen Schaltelemente, selektiv zu deaktivieren bzw. abzutrennen.

Das Betätigungssystem ist ferner so ausgelegt, dass es im Falle des Ausfalls einer Motorwicklung über ein ausreichendes rheostatisches Brems- und Phasenhaltemoment verfügt.

Die Stromversorgung der Sicherheitsbremssteuerung, d.h. der ersten Bremssteuerungseinheit 6, erfolgt über eine separate Stromversorgung (U_Sicherheitsbremse), die von der Zugsteuerung abgeschaltet werden kann, um die volle Bremskraft (Abstellbremskraft) zu erreichen oder über ein Sicherheitsbrems-Ansteuersignal (Sicherheitsbremseaktivierung, binäres Signal, Low-Aktiv), welches dabei auch die Energie für die Sicherheitsbremssteuerung bereitstellt.

Die erzeugte Sicherheitsbremskraft wirkt auch gegen die Feder und die Feder ist in dieser Position weniger zusammengedrückt als beim Lösen der Bremse, daher ist die Kraft am Dreh-zu-Linear-Umsetzer stark reduziert.

Daher ist der Motorstrom zum Aufrechterhalten der Sicherheitsbremskraft wesentlich kleiner als der Strom zum Lösen der Bremse, so dass durch die Begrenzung der verfügbaren Leistung an der Stromversorgung U_Sicherheitsbremse gewährleistet ist, dass die Bremse nach einer Sicherheitsbremsanforderung auch bei Fehlern der Logiksteuerung der Sicherheitsbremse nicht gelöst bleibt.

Die Betriebs- und die Notbremsung werden von denselben Steuerelementen ausgeführt: Bremssteuergerät und Motortreiber mit Positionskontroller.

Die Software im Betriebs- und Notbremssteuergerät räumt jedoch den Notbremsanforderungen eine höhere Priorität ein, wenn die gewünschte Kraft und/oder der Kraftgradient anders sind als bei der Betriebsbremse.

In diesem Beispiel erfolgt die Kraftregelung durch das Betriebs- uns Notbremssteuergerät unter Verwendung der Kraftrückmeldung, um eine neue Sollposition für den Motortreiber anzufordern.

Die Zugsteuerung hält die Steuergeräte für die Sicherheitsbremsung, d.h. die erste Bremssteuerungseinheit 6, und die Parkbremsung, d.h. die zweite Bremssteuerungseinheit 8, deaktiviert, während der Motortreiber die Motorposition mithilfe der Positionsrückmeldung des Elektromotors M steuert.

Die Zugsteuerung aktiviert bei Anforderung der Betriebs- oder Notbremsung das Schaltelement SW1, wenn keine Park- oder Sicherheitsbremsung betätigt wird, da sonst der Motortreiber nicht eingeschaltet wird.

Falls das Betriebs- und Notbremssteuerung, d.h. die Motorsteuerungseinheit 4, eine Fehlfunktion des Motortreibers erkennt, kann es den Motortreiber auch stromlos schalten (mittels Schaltelement SW2) und die Zugsteuerung informieren (via Bremsenstatus-Signal).

Die Zugsteuerung kann die Parkbremse auf verschiedene Arten aktivieren, zum Beispiel:
- Durch Abschalten der Motorphasen vom Rest des Systems mit Hilfe der Parkbremsensteuerung (mittels des Parkschaltelements SW_Park) soll die volle (Feder-) Bremskraft ohne Ruckbegrenzung bei einem fahrenden Zug erreicht werden. Um das Betätigungssystem weniger zu belasten, sollte die Aktivierung der Parkbremsung erst erfolgen, nachdem die Bremse voll angezogen ist.
- Wenn das gesamte System mit Ausnahme der Aktivierung der Parkbremsung ausgeschaltet wird, können der Motortreiber oder der Phasenhalter die Motorposition nicht halten, sondern die rheostatischen Widerstände (R_Rheo) sind passiv mit den Motorwicklungen U, V, W verbunden. Im Falle eines fahrenden Zuges (mit gelösten Bremsen) wird der Ruck begrenzt (aber nicht kontrolliert) und die volle Kraft wird nach einiger Zeit erreicht.

### BEZUGSZEICHENLISTE

- 2: Bremseinrichtung
- 4: Motorsteuerungseinheit
- 6: erste Bremssteuerungseinheit
- 8: zweite Bremssteuerungseinheit

- BS: Bremssystem
- M: Elektromotor
- R_Rheo: passives elektronisches Element
- SW1: erstes Schaltelement
- SW2: zweites Schaltelement
- SW3: drittes Schaltelement
- SW_Hold,U: Halteschaltelement
- SW_Hold,V: Halteschaltelement
- SW_Hold,W: Halteschaltelement
- SW_Park: Parkschaltelement
- SW_Rheo: Schaltelement
- SW_Sich: Sicherheitsschaltelement
- U_Bat: zentrale Stromversorgung
- U_Sicherheitsbremse: Sicherheitsstromversorgung
- V: Vorrichtung

## Patentansprüche

1. Vorrichtung (V) zur Steuerung einer passiven Bremseinrichtung (2), insbesondere einer passiven elektromechanischen Bremseinrichtung, wobei die Vorrichtung (V) Folgendes umfasst:
- einen Elektromotor (M) zum Lösen der passiven Bremseinrichtung (2) gegen eine Federkraft;
- eine Motorsteuerungseinheit (4) zur Steuerung des Elektromotors (M) für eine Betriebsbremsung und/oder eine Notbremsung, wobei die Motorsteuerungseinheit (4) mit dem Elektromotor (M) trennbar elektrisch verbunden ist,
- eine erste Bremssteuerungseinheit (6) für eine Sicherheitsbremsung, wobei die erste Bremssteuerungseinheit (6) mit dem Elektromotor (M) trennbar elektrisch verbunden ist, und
- eine zweite Bremssteuerungseinheit (8) für eine Parkbremsung, wobei die zweite Bremssteuerungseinheit (8) mit dem Elektromotor (M) trennbar elektrisch verbunden ist,
wobei die Betriebsbremsung und/oder die Notbremsung mittels der Motorsteuerungseinheit (4), die Sicherheitsbremsung mittels der ersten Bremssteuerungseinheit (6) und die Parkbremsung mittels der zweiten Bremssteuerungseinheit (8) funktional unabhängig zueinander aktivierbar sind.

2. Vorrichtung (V) gemäß Anspruch 1,
**dadurch gekennzeichnet, dass**
die erste Bremssteuerungseinheit (6) zwischen der Motorsteuerungseinheit (4) und dem Elektromotor (M) angeordnet ist und/oder die zweite Bremssteuerungseinheit (8) zwischen der Motorsteuerungseinheit (4) und dem Elektromotor (M) angeordnet ist.

3. Vorrichtung (V) gemäß Anspruch 1 oder 2,
**dadurch gekennzeichnet, dass**
die erste Bremssteuerungseinheit (6) zwischen der Motorsteuerungseinheit (4) und der zweiten Bremssteuerungseinheit (8) angeordnet ist und die zweite Bremssteuerungseinheit (8) zwischen der ersten Bremssteuerungseinheit (6) und dem Elektromotor (M) angeordnet ist.

4. Vorrichtung (V) gemäß einem der Ansprüche 1 bis 3,
**dadurch gekennzeichnet, dass**
die erste Bremssteuerungseinheit (6) zumindest ein Sicherheitsschaltelement (SW_Sich) aufweist, mittels welchem die Motorsteuerungseinheit (4) von dem Elektromotor (M) elektrisch trennbar ist.

5. Vorrichtung (V) gemäß einem der Ansprüche 1 bis 4,
**dadurch gekennzeichnet, dass**
die Motorsteuerungseinheit (4) zwischen einem Aktiviert-Zustand, in welchem die Motorsteuerungseinheit (4) mit dem Elektromotor (M) verbunden ist, und einem Deaktiviert-Zustand schaltbar ist, in welchem die Motorsteuerungseinheit (4) mit dem Elektromotor (M) nicht verbunden ist.

6. Vorrichtung (V) gemäß einem der Ansprüche 1 bis 5,
**dadurch gekennzeichnet, dass**
die erste Bremssteuerungseinheit (6) zumindest ein passives elektronisches Element (R_Rheo) mit einem elektrischen Widerstand und zumindest ein Schaltelement (SW_Rheo) aufweist, mittels welchem das zumindest eine passive elektronische Element (R_Rheo) mit dem Elektromotor(M) elektrisch verbindbar ist, wobei insbesondere, wenn das zumindest eine passive elektronische Element (R_Rheo) mit dem Elektromotor (M) elektrisch verbunden ist, eine Sicherheitsbremskraft der passiven Bremseinrichtung (2) durch den elektrischen Widerstand des zumindest einen passiven elektronischen Elements (R_Rheo) einstellbar und/oder steuerbar ist.

7. Vorrichtung (V) gemäß Anspruch 6,
**dadurch gekennzeichnet, dass**
die erste Bremssteuerungseinheit (6) einen Phasenhalter aufweist, welcher zumindest ein Halteschaltelement (SW_Hold,U, SW_Hold,V, SW_Hold,W) umfasst, mittels welchem eine Sicherheitsstromversorgung (U_Sicherheitsbremse) zu dem Elektromotor (M) schaltbar ist für eine Aufrechterhaltung der Sicherheitsbremskraft der passiven Bremseinrichtung (2).

8. Vorrichtung (V) gemäß Anspruch 6 oder 7,
**dadurch gekennzeichnet, dass**
die Sicherheitsstromversorgung (U_Sicherheitsbremse) von einer Stromversorgung (U_Bat)verschieden ist, welche über die Motorsteuerungseinheit (4) zu dem Elektromotor (M) schaltbar ist.

9. Vorrichtung (V) gemäß Anspruch 7 oder 8,
**dadurch gekennzeichnet, dass**
die erste Bremssteuerungseinheit (6) mittels des zumindest einen Schaltelements (SW_Rheo) und des zumindest einen Halteschaltelements (SW_Hold,U, SW_Hold,V, SW_Hold,W) zwischen einem Aktiviert-Zustand, in welchem die erste Bremssteuerungseinheit (6) mit dem Elektromotor (M) verbunden ist, und einem Deaktiviert-Zustand schaltbar ist, in welchem die erste Bremssteuerungseinheit (6) mit dem Elektromotor (M) nicht verbunden ist.

10. Vorrichtung (V) gemäß einem der Ansprüche 1 bis 9,
**dadurch gekennzeichnet, dass**
die zweite Bremssteuerungseinheit (8) zumindest ein Parkschaltelement (SW_Park) aufweist, mittels welchem die Motorsteuerungseinheit (4) und/oder die erste Bremssteuerungseinheit (6) von dem Elektromotor (M) elektrisch trennbar ist.

11. Bremssystem (BS), aufweisend:
- zumindest eine Vorrichtung (V) zur Steuerung einer passiven Bremseinrichtung (2), insbesondere einer passiven elektromechanischen Bremseinrichtung, gemäß einem der Ansprüche 1 bis 10; und
- zumindest eine passive Bremseinrichtung (2), insbesondere eine passive elektromechanische Bremseinrichtung, welche der besagten Vorrichtung (V) zugeordnet ist und welche zumindest einen Federkraftbremsaktor zum Erzeugen einer Federkraft aufweist.

12. Verfahren zum Steuerung einer passiven Bremseinrichtung (2), insbesondere einer passiven elektromechanischen Bremseinrichtung, wobei das Verfahren mittels einer Vorrichtung (V) gemäß einem Ansprüche 1 bis 10 oder einem Bremssystem (BS) gemäß Anspruch 11 durchführbar ist, und wobei das Verfahren zumindest einen der folgenden Schritte umfasst:
- Durchführen einer Betriebsbremsung und/oder einer Notbremsung, indem zumindest die Motorsteuerungseinheit (4) mit dem Elektromotor (M) verbunden ist oder wird und die erste Bremssteuerungseinheit (6) von dem Elektromotor (M) getrennt ist oder wird; und/oder
- Durchführen einer Sicherheitsbremsung, indem zumindest die Motorsteuerungseinheit (4) von dem Elektromotor (M) getrennt ist oder wird und die erste Bremssteuerungseinheit (6) mit dem Elektromotor (M) verbunden ist oder wird; und/oder
- Durchführen einer Parkbremsung, indem zumindest die Motorsteuerungseinheit (4) von dem Elektromotor (M) getrennt ist oder wird und die erste Bremssteuerungseinheit (6) von dem Elektromotor (M) getrennt ist oder wird.

13. Vefahren gemäß Anspruch 12,
**dadurch gekennzeichnet, dass**
beim Durchführen der Betriebsbremsung und/oder der Notbremsung die erste Bremssteuerungseinheit (6) von dem Elektromotor (M) getrennt ist oder wird mittels zumindest eines Schaltelements (SW_Rheo) und zumindest eines Halteschaltelements (SW_Hold,U, SW_Hold,V, SW_Hold,W) der ersten Bremssteuerungseinheit (6).

14. Vefahren gemäß Anspruch 12 oder 13,
**dadurch gekennzeichnet, dass**
beim Durchführen der Sicherheitsbremsung die Motorsteuerungseinheit (4) von dem Elektromotor (M) getrennt ist oder wird mittels zumindest eines Sicherheitsschaltelements (SW_Sich) der ersten Bremssteuerungseinheit (6) und/oder mittels Umschaltens der Motorsteuerungseinheit (4) in einen Deaktiviert-Zustand.

15. Vefahren gemäß einem der Ansprüche 12 bis 14,
**dadurch gekennzeichnet, dass**
beim Durchführen der Parkbremsung die Motorsteuerungseinheit (4) von dem Elektromotor (M) getrennt ist oder wird und die erste Bremssteuerungseinheit (6) von dem Elektromotor (M) getrennt ist oder wird jeweils mittels zumindest eines Parkschaltelements (SW_Park) der zweiten Bremssteuerungseinheit (8).

## Claims

1. Device (V) for controlling a passive brake device (2), in particular a passive electromechanical brake device, wherein the device (V) comprises the following:
- an electric motor (M) for releasing the passive brake device (2) against a spring force,
- an engine control unit (4) for controlling the electric motor (M) for service braking and/or emergency braking, wherein the engine control unit (4) is separably electrically connected to the electric motor (M),
- a first brake control unit (6) for safety braking, wherein the first brake control unit (6) is separably electrically connected to the electric motor (M), and
- a second brake control unit (8) for parking braking, wherein the second brake control unit (8) is separably electrically connected to the electric motor (M),
wherein service braking and/or emergency braking can be activated functionally independently of each other by means of the engine control unit (4), safety braking by means of the first brake control unit (6) and parking braking by means of the second brake control unit (8).

2. Device (V) according to claim 1,
**characterized in that**
the first brake control unit (6) is arranged between the engine control unit (4) and the electric motor (M) and/or the second brake control unit (8) is arranged between the engine control unit (4) and the electric motor (M).

3. Device (V) according to claim 1 or 2,
**characterized in that**
the first brake control unit (6) is arranged between the engine control unit (4) and the second brake control unit (8) and the second brake control unit (8) is arranged between the first brake control unit (6) and the electric motor (M).

4. Device (V) according to any one of claims 1 to 3,
**characterized in that**
the first brake control unit (6) has at least one safety switching element (SW_Safe), by means of which the engine control unit (4) can be electrically disconnected from the electric motor (M).

5. Device (V) according to any one of claims 1 to 4,
**characterized in that**
the engine control unit (4) can be switched between an activated state, in which the engine control unit (4) is connected to the electric motor (M), and a deactivated state, in which the engine control unit (4) is not connected to the electric motor (M).

6. Device (V) according to any one of claims 1 to 5,
**characterized in that**
the first brake control unit (6) has at least one passive electronic element (R_Rheo) with an electrical resistor and at least one switching element (SW_Rheo), by means of which the at least one passive electronic element (R_Rheo) can be connected to the electric motor (M), wherein, in particular, when the at least one passive electronic element (R_Rheo) is electrically connected to the electric motor (M), a safety braking force of the passive brake device (2) can be adjusted and/or controlled by the electrical resistor of the at least one passive electronic element (R_Rheo).

7. Device (V) according to claim 6,
**characterized in that**
the first brake control unit (6) has a phase holder, which comprises at least one holding switching element (SW_Hold,U, SW_Hold,V, SW_Hold,W), by means of which a safety power supply (U_Safety brake) to the electric motor (M) can be switched to maintain the safety braking force of the passive brake device (2).

8. Device (V) according to claim 6 or 7,
**characterized in that**
the safety power supply (U_Safety brake) is different from a power supply (U_Bat), which can be switched to the electric motor (M) by the engine control unit (4).

9. Device (V) according to claim 7 or 8,
**characterized in that**
the first brake control unit (6) can be switched by means of the at least one switching element (SW_Rheo) and the at least one holding switching element (SW_Hold,U, SW_Hold,V, SW_Hold,W) between an activated state, in which the first brake control unit (6) is connected to the electric motor (M), and a deactivated state, in which the first brake control unit (6) is not connected to the electric motor (M).

10. Device (V) according to any one of claims 1 to 9,
**characterized in that**
the second brake control unit (8) has at least one parking switching element (SW_Park), by means of which the engine control unit (4) and/or the first brake control unit (6) can be electrically disconnected from the electric motor (M).

11. Brake system (BS), having:
- at least one device (V) for controlling a passive brake device (2), in particular a passive electromechanical brake device, according to any one of claims 1 to 10, and
- at least one passive brake device (2), in particular a passive electromechanical brake device, which is assigned to said device (V) and which has at least one spring force brake actuator for generating a spring force.

12. Method for controlling a passive brake device (2), in particular a passive electromechanical brake device, wherein the method can be performed by means of a device (V) according to any one of claims 1 to 10 or a brake system (BS) according to claim 11, and wherein the method comprises at least one of the following steps:
- Performing service braking and/or emergency braking, while at least the engine control unit (4) is or will be connected to the electric motor (M) and the first brake control unit (6) is or will be disconnected from the electric motor (M), and/or
- Performing service braking, while at least the engine control unit (4) is or will be disconnected from the electric motor (M) and the first brake control unit (6) is or will be connected to the electric motor (M), and/or
- Performing parking braking, while at least the engine control unit (4) is or will be disconnected from the electric motor (M) and the first brake control unit (6) is or will be disconnected from the electric motor (M).

13. Method according to claim 12,
**characterized in that**
when performing service braking and/or emergency braking, the first brake control unit (6) is or will be disconnected from the electric motor (M) by means of at least one switching element (SW_Rheo) and at least one holding switching element (SW_Hold,U, SW_Hold,V, SW_Hold,W) of the first brake control unit (6).

14. Method according to claim 12 or 13,
**characterized in that**
when performing safety braking, the engine control unit (4) is or will be disconnected from the electric motor (M) by means of at least one safety switching element (SW_Safe) of the first brake control unit (6) and/or by switching the engine control unit (4) to a deactivated state.

15. Method according to any one of claims 12 to 14,
**characterized in that**
when performing parking braking, the engine control unit (4) is or will be disconnected from the electric motor (M) and the first brake control unit (6) is or will be disconnected from the electric motor (M), in each case, by means of at least one parking switching element (SW_Park) of the second brake control unit (8).

## Revendications

1. Dispositif (V) permettant de commander un appareil de freinage passif (2), en particulier un appareil de freinage électromécanique passif, dans lequel le dispositif (V) comprend :
- un moteur électrique (M) pour libérer l'appareil de freinage passif (2) contre une force élastique ;
- une unité de commande de moteur (4) pour commander le moteur électrique (M) pour un freinage de service et/ou un freinage d'urgence, dans lequel l'unité de commande de moteur (4) est connectée électriquement au moteur électrique (M) de manière séparable,
- une première unité de commande de freinage (6) pour un freinage de sécurité, dans lequel la première unité de commande de freinage (6) est connectée électriquement au moteur électrique (M) de manière séparable, et
- une seconde unité de commande de freinage (8) pour un freinage de stationnement, dans lequel la seconde unité de commande de freinage (8) est connectée électriquement au moteur électrique (M) de manière séparable,
dans lequel le freinage de service et/ou le freinage d'urgence peuvent être activés au moyen de l'unité de commande de moteur (4), le freinage de sécurité au moyen de la première unité de commande de freinage (6) et le freinage de stationnement au moyen de la seconde unité de commande de freinage (8) de manière fonctionnellement indépendante les uns des autres.

2. Dispositif (V) selon la revendication 1,
**caractérisé en ce que**
la première unité de commande de freinage (6) est disposée entre l'unité de commande de moteur (4) et le moteur électrique (M), et/ou la seconde unité de commande de freinage (8) est disposée entre l'unité de commande de moteur (4) et le moteur électrique (M).

3. Dispositif (V) selon la revendication 1 ou 2,
**caractérisé en ce que**
la première unité de commande de freinage (6) est disposée entre l'unité de commande de moteur (4) et la seconde unité de commande de freinage (8), et la seconde unité de commande de freinage (8) est disposée entre la première unité de commande de freinage (6) et le moteur électrique (M).

4. Dispositif (V) selon l'une quelconque des revendications 1 à 3,
**caractérisé en ce que**
la première unité de commande de freinage (6) présente au moins un élément de commutation de sécurité (SW_Sécu) au moyen duquel l'unité de commande de moteur (4) peut être séparée électriquement du moteur électrique (M).

5. Dispositif (V) selon l'une quelconque des revendications 1 à 4,
**caractérisé en ce que**
l'unité de commande de moteur (4) peut être commutée entre un état activé, dans lequel l'unité de commande de moteur (4) est connectée au moteur électrique (M), et un état désactivé, dans lequel l'unité de commande de moteur (4) n'est pas connectée au moteur électrique (M).

6. Dispositif (V) selon l'une quelconque des revendications 1 à 5,
**caractérisé en ce que**
la première unité de commande de freinage (6) présente au moins un élément électronique passif (R_Rheo) avec une résistance électrique et au moins un élément de commutation (SW_Rheo) au moyen duquel le au moins un élément électronique passif (R_Rheo) peut être connecté électriquement au moteur électrique (M), dans lequel en particulier, lorsque le au moins un élément électronique passif (R_Rheo) est connecté électriquement au moteur électrique (M), une force de freinage de sécurité de l'appareil de freinage passif (2) peut être réglée et/ou commandée par l'intermédiaire de la résistance électrique de l'au moins un élément électronique passif (R_Rheo).

7. Dispositif (V) selon la revendication 6,
**caractérisé en ce que**
la première unité de commande de freinage (6) présente un support de phase qui comprend au moins un élément de commutation de maintien (SW_Maintien,U, SW_Maintien,V, SW_Maintien,W) au moyen duquel une alimentation électrique de sécurité (U_Frein de sécurité) peut être commutée vers le moteur électrique (M) pour un maintien de la force de freinage de sécurité de l'appareil de freinage passif (2).

8. Dispositif (V) selon la revendication 6 ou 7,
**caractérisé en ce que**
l'alimentation électrique de sécurité (U_Frein de sécurité) est différente d'une alimentation électrique (U_Bat) qui peut être commutée vers le moteur électrique (M) par l'intermédiaire de l'unité de commande de moteur (4).

9. Dispositif (V) selon la revendication 7 ou 8,
**caractérisé en ce que**
la première unité de commande de freinage (6) peut être commutée au moyen de l'au moins un élément de commutation (SW_Rheo) et de l'au moins un élément de commutation de maintien (SW_Maintien,U, SW_Maintien,V, SW_Maintien,W) entre un état activé, dans lequel la première unité de commande de freinage (6) est connectée au moteur électrique (M) et un état désactivé, dans lequel la première unité de commande de freinage (6) n'est pas connectée au moteur électrique (M).

10. Dispositif (V) selon l'une quelconque des revendications 1 à 9,
**caractérisé en ce que**
la seconde unité de commande de freinage (8) présente au moins un élément de commutation de stationnement (SW_Stat) au moyen duquel l'unité de commande de moteur (4) et/ou la première unité de commande de freinage (6) peuvent être séparées électriquement du moteur électrique (M).

11. Système de freinage (BS), présentant :
- au moins un dispositif (V) permettant de commander un appareil de freinage passif (2), en particulier un appareil de freinage électromécanique passif, selon l'une quelconque des revendications 1 à 10; et
- au moins un appareil de freinage passif (2), en particulier un appareil de freinage électromécanique passif qui est associé audit dispositif (V) et qui présente au moins un actionneur de freinage à force de ressort pour générer une force de ressort.

12. Procédé de commande d'un appareil de freinage passif (2), en particulier d'un appareil de freinage électromécanique passif, dans lequel le procédé peut être réalisé au moyen d'un dispositif (V) selon l'une quelconque des revendications 1 à 10 ou d'un système de freinage (SF) selon la revendication 11, et dans lequel le procédé comprend au moins l'une des étapes suivantes :
- réaliser un freinage de service et/ou un freinage d'urgence lorsqu'au moins l'unité de commande de moteur (4) est ou sera connectée au moteur électrique (M) et la première unité de commande de freinage (6) est ou sera séparée du moteur électrique (M) ; et/ou
- réaliser un freinage de sécurité lorsqu'au moins l'unité de commande de moteur (4) est ou sera séparée du moteur électrique (M) et la première unité de commande de freinage (6) est ou sera connectée au moteur électrique (M) ; et/ou
- réaliser un freinage de stationnement lorsqu'au moins l'unité de commande de moteur (4) est ou sera séparée du moteur électrique (M) et la première unité de commande de freinage (6) est ou sera séparée du moteur électrique (M).

13. Procédé selon la revendication 12,
**caractérisé en ce que**
lors de la réalisation du freinage de service et/ou du freinage d'urgence, la première unité de commande de freinage (6) est ou sera séparée du moteur électrique (M) au moyen d'au moins un élément de commutation (SW_Rheo) et d'au moins un élément de commutation de maintien (SW_Maintien,U, SW_Maintien,V, SW_Maintien,W) de la première unité de commande de freinage (6).

14. Procédé selon la revendication 12 ou 13,
**caractérisé en ce que**
lors de la réalisation du freinage de sécurité, l'unité de commande de moteur (4) est ou sera séparée du moteur électrique (M) au moyen d'au moins un élément de commutation de sécurité (SW_Sécu) de la première unité de commande de freinage (6) et/ou au moyen de la commutation de l'unité de commande de moteur (4) dans un état désactivé.

15. Procédé selon l'une quelconque des revendications 12 à 14,
**caractérisé en ce que**
lors de la réalisation du freinage de stationnement, l'unité de commande de moteur (4) est ou sera séparée du moteur électrique (M) et la première unité de commande de freinage (6) est ou sera séparée du moteur électrique (M) respectivement au moyen d'au moins un élément de commutation de stationnement (SW_Stat) de la seconde unité de commande de freinage (8).
